# FASCICULE DE BREVET EUROPEEN

(11) **EP 3 689 669 B1**
(45) Date de publication et mention de la délivrance du brevet: **14.10.2026**
(21) Numéro de dépôt: 20154728.8
(22) Date de dépôt: 30.01.2020
(51) Int. Cl.: B60M 3/04, B60M 1/10, B60M 1/36

(54) **SYSTÈME D'ALIMENTATION PAR LE SOL ROBUSTE AUX COURTS-CIRCUITS ET PROCÉDÉ ASSOCIÉ**
BODENSTROMVERSORGUNGSSYSTEM MIT KURZSCHLUSSFESTIGKEIT UND ENTSPRECHENDE VERFAHREN
SYSTEM FOR SUPPLYING POWER VIA THE GROUND WITH SHORT-CIRCUIT ROBUSTNESS AND ASSOCIATED METHOD

(30) Priorité: 01.02.2019 FR 1900999
(43) Date de publication de la demande: 05.08.2020
(73) Titulaire: ALSTOM Holdings, 93400 Saint-Ouen-sur-Seine (FR)
(72) Inventeur: HOURTANE, Jean-Luc, 13320 BOUC BEL AIR (FR); GAUCHE, Denis, 06620 LE BAR SUR LOUP (FR)
(74) Mandataire: Plasseraud IP

(56) Documents cités:
- EP-A1- 1 043 187
- EP-A1- 1 095 812
- EP-A1- 3 395 604
- FR-A1- 2 762 810
- US-A1- 2011 017 531
- CHRISTOPHE PRÉVÉ: "Protection Functions and their Applications", PROTECTION OF ELECTRICAL NETWORKS, 1 January 2006 (2006-01-01), pages 207 - 316, XP055698340, ISBN: 978-0-470-61222-4, Retrieved from the Internet <URL:https://onlinelibrary.wiley.com/doi/pdfdirect/10.1002/9780470612224.ch7> [retrieved on 20200526], DOI: 10.1002/9780470612224

## Description

L'invention a pour domaine celui des systèmes d'alimentation par le sol, propres à fournir, par conduction, une puissance électrique à un véhicule électrique alors que ce dernier est en mouvement.

Le document EP 1 095 812 B1 divulgue un système d'alimentation par le sol comportant, affleurant à la surface de la chaussée, une piste de phase connectée, au moyen d'une ligne de phase à une source de puissance électrique distante, telle qu'une sous-station d'alimentation électrique.

Au cours du fonctionnement normal du système, les composants dits « de phase » sont propres à être portés à un potentiel haut, par exemple entre 700 et 950 V, tandis que les composants dits « de neutre » sont portés à un potentiel bas de 0 V correspondant au potentiel de la terre.

La piste de phase est constituée d'une succession de segments longitudinaux disposés les uns à la suite des autres, tout en ménageant une isolation entre deux segments consécutifs.

Le système d'alimentation par le sol comporte, par segment, un moyen de commutation commandé permettant de connecter le segment correspondant à la ligne de phase au passage d'un véhicule. Sinon, le moyen de commutation commandé connecte le segment correspondant à la ligne de neutre, de manière à sécuriser l'installation.

Le véhicule collecte une puissance électrique au moyen d'un patin venant en contact, d'une part, avec un segment alimenté de la piste de phase et, d'autre part, avec la piste de neutre, qui assure le retour du courant vers la ligne de neutre.

Pour que ce type de système d'alimentation par le sol puisse être largement déployé, il est nécessaire de maîtriser les courts-circuits, en particulier les courts-circuits entre un segment alimenté et la piste de neutre ou encore les courts-circuits entre un segment alimenté et un segment non alimenté voisin du segment alimenté.

De tels courts-circuits surviennent ou ont une probabilité plus importante de survenir en cas de présence de débris ou de dépôts salins liés au ruissellement d'eau sur la surface de la chaussée établissant un contact électrique entre le segment alimenté et la ligne de neutre, via soit la piste de neutre connectée à la ligne de neutre, soit le segment voisin connecté à la ligne de neutre.

Dans le document de l'état de la technique cité précédemment, le moyen de commutation commandé est protégé par un disjoncteur. Celui-ci s'ouvre lorsque le courant circulant de la ligne de phase vers le segment alimenté dépasse une valeur prédéterminée, ce qui est le cas lors d'un court-circuit.

Cependant en cas de court-circuit sur un segment, ce disjoncteur entraîne l'ouverture du circuit électrique sur une section complète d'alimentation, rendant les autres segments alimentés par la section complète d'alimentation indisponibles jusqu'à re-fermeture du disjoncteur.

L'ouvrage de Christophe Prévé, "Protection Functions and their Applications", Protection of Electrical Networks, 1 janvier 2006 (2006-01-01), pages 207-316, ISBN 978-0470-61222-4, divulgue un relais propre à mesurer l'intensité du courant circulant dans une maille intégrant un interrupteur et à ouvrir cet interrupteur lorsque la mesure de l'intensité dépasse un seuil prédéfini.

L'invention a donc pour but de résoudre ce problème en proposant un système d'alimentation par le sol amélioré.

L'invention a pour objet un système d'alimentation par le sol et un procédé mis en œuvre dans un système d'alimentation par le sol conformes aux revendications annexées.

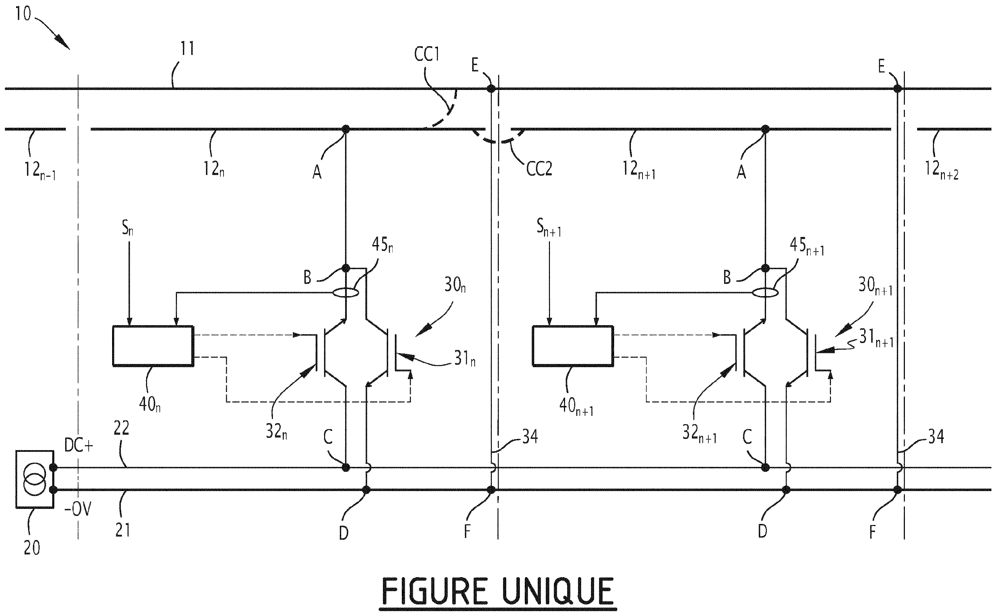

L'invention et ses avantages seront mieux compris à la lecture de la description détaillée qui va suivre, d'un mode de réalisation particulier, donnée uniquement à titre d'exemple non limitatif, la description étant faite en se référant à l'unique dessin annexé représentant schématiquement le circuit électrique du système d'alimentation par le sol selon l'invention.

La figure annexée représente un système d'alimentation par le sol 10.

Le système 10 comporte une piste de neutre 11 et une piste de phase 12, circulant en parallèle l'une de l'autre et destinées à être implantées dans la chaussée, de manière à être affleurantes à la surface de cette dernière, afin que le patin équipant un véhicule électrique circulant sur la chaussée puisse collecter une puissance électrique par contact avec la piste de neutre 11 et la piste de phase 12.

La piste de phase 12 est subdivisée en une pluralité de segments longitudinaux disposés les uns à la suite des autres, tout en ménageant entre deux segments consécutifs une isolation électrique. Sur la figure, quatre segments successifs sont représentés et référencés respectivement 12ₙ₋₁, 12ₙ, 12ₙ₊₁ et 12ₙ₊₂.

Le système 10 comporte également une source de puissance électrique 20. Il peut s'agir par exemple d'une sous-station d'alimentation électrique permettant d'alimenter en puissance électrique une section, ou portion, des pistes de phase 12 et de neutre 11. Pour alimenter cette section des pistes de phase 12 et de neutre 11, le système 10 comporte une ligne de neutre 21 et une ligne de phase 22 respectivement connectées aux bornes de sortie de la source 20.

La ligne de neutre 21 est portée à un potentiel bas, par exemple égal au potentiel de la terre. Il est noté -0V sur la figure. La ligne de phase 22 est portée à un potentiel haut. Il est noté DC+ sur la figure.

La ligne de neutre 21 et la ligne de phase 22 circulent le long de la chaussée.

Le système 10 comporte, pour chaque segment de la piste de phase 12 un moyen de commutation commandé 30ₙ permettant de connecter le segment correspondant soit à la ligne de phase 22 soit à la ligne de neutre 21.

Par exemple, le moyen de commutation commandé 30ₙ du segment 12ₙ comporte un premier transistor 31ₙ permettant, lorsqu'il est commandé de manière à être passant, de porter le segment 12ₙ au potentiel de la ligne de neutre 21. Le moyen de commutation commandé 30ₙ comporte également un second transistor 32ₙ qui, lorsqu'il est commandé de manière à être passant, permet de porter le segment 12ₙ au potentiel de la ligne de phase 12.

Plus spécifiquement, le second transistor 32ₙ est de préférence un transistor bipolaire à grille isolée (IGBT) dont le collecteur est connecté à un nœud C de la ligne de phase 22. L'émetteur du transistor 32ₙ est connecté à un nœud commun B, lui-même relié à un point de connexion A sur le segment 12ₙ.

En ce qui concerne le premier transistor 31n, qui est également de préférence du type IGBT, son émetteur est connecté à un nœud D de la ligne de neutre 21 et son collecteur est connecté au nœud commun B.

Il est à noter que la piste de neutre est connectée à la ligne de neutre 21 par une liaison électrique 34 s'étendant entre un point de connexion E à la piste de neutre 11 et un point de connexion F à la ligne de neutre 21.

Le moyen de commutation commandé 30ₙ comporte également un contrôleur 40ₙ.

Le contrôleur 40ₙ est propre à piloter l'état des premier et second transistors 31ₙ et 32ₙ en appliquant des signaux de commutation adaptés sur les grilles de ces deux transistors.

En entrée, le contrôleur 40ₙ est propre à prendre en compte un signal Sₙ indiquant le passage d'un véhicule et le besoin d'alimenter le segment 12ₙ. La manière de générer un tel signal Sₙ est hors du périmètre de la présente invention et est connue de l'homme du métier.

Le moyen de commutation commandé 30ₙ comporte également un capteur d'intensité 45ₙ propre à mesurer l'intensité du courant circulant dans le transistor 32n. L'homme du métier connait des capteurs d'intensité, notamment des capteurs qui ne modifient pas la puissance sur la maille AB. Il peut par exemple s'agir d'un capteur de courant à effet Hall.

Le signal de mesure In généré par le capteur 45ₙ est appliqué en entrée du contrôleur 40ₙ.

Une description similaire pourrait être faite pour le moyen de commutation commandé 30ₙ₊₁ associé au segment 12ₙ₊₁ comportant des premier et second transistors 31ₙ₊₁ et 32ₙ₊₁, un organe de mesure 45ₙ₊₁ de l'intensité du courant circulant dans le second transistor 32ₙ₊₁, un contrôleur 40ₙ₊₁ de commande de l'étant des premier et second transistors en fonction d'un signal Sₙ₊₁ de présence de véhicule au-dessus du segment 12ₙ₊₁ et du signal délivré par l'organe 45ₙ₊₁.

De préférence, le système d'alimentation par le sol comprend un disjoncteur (non représenté sur la figure) positionné entre la source de puissance électrique et les moyens de commutation commandés des segments d'une section de la piste de phase.

Lorsque le signal Sn indique qu'aucun véhicule ne requiert que le segment 12ₙ soit porté au potentiel haut, le premier transistor 31ₙ est commandé en fermeture de manière à garantir que le segment 12ₙ est au potentiel bas de la terre. Le second transistor 32ₙ est commandé en ouverture.

Lorsque le signal Sₙ change d'état, indiquant que le segment 12ₙ doit être porté au potentiel haut pour qu'une puissance puisse être captée par un véhicule électrique passant au-dessus du segment 12ₙ, le contrôleur 40ₙ commande le basculement des premier et second transistors 31ₙ et 32ₙ. Le premier transistor 31ₙ est basculé en ouverture tandis que le second transistor 32ₙ est commandé en fermeture, de manière à porter le segment 12ₙ au potentiel haut.

Cependant, si le segment 12ₙ est en court-circuit avec la piste de neutre 11, tel que représenté par le court-circuit CC1 en pointillés sur la figure, une boucle de courant est établie entre les bornes de la source 20. Plus précisément, cette boucle s'étend du nœud C sur la ligne de phase 22 au point A de connexion au segment 12ₙ, à travers le transistor 32ₙ, puis du segment 12ₙ à la piste de neutre 11 par le court-circuit CC1 et enfin du point E de connexion à la piste de neutre 11 au point F de connexion à la ligne de neutre 21.

En conséquence, la source 20 qui est mise en court-circuit, débite un courant important à travers cette boucle.

Cependant, le capteur 45ₙ délivre à chaque instant une mesure de l'intensité du courant dans le transistor 32n.

Le signal mesuré In est traité par le contrôleur 40ₙ. Par exemple, à chaque instant, le signal In est comparé à une valeur seuil par le contrôleur 40ₙ. Si l'intensité mesurée dépasse le seuil prédéfini, le contrôleur 40ₙ commande le second transistor 32ₙ dans l'état d'ouverture, c'est-à-dire dans l'état bloquant. Puis, après l'ouverture du second transistor 32n et avantageusement lorsque plus aucun véhicule n'est détecté au-dessus du segment 12ₙ, alors le contrôleur 40 commande le premier transistor 31n dans l'état de fermeture, c'est-à-dire dans l'état passant.

Le court-circuit CC1 n'a alors aucune conséquence notamment en termes de disponibilité de l'alimentation sur la ligne de phase 22.

De manière similaire, si le segment 12ₙ, au moment où il est porté au potentiel haut, est en court-circuit avec un segment voisin, tel que le segment 12ₙ₊₁, porté au potentiel bas (comme cela est représenté par la ligne en pointillés CC2 sur la figure), une boucle de courant est établie entre les bornes de la source 20.

Plus précisément cette boucle s'étend du nœud C au point A de connexion au segment 12n, à travers le transistor 32ₙ, puis entre le segment 12ₙ et le segment 12ₙ₊₁ via le court-circuit CC2, puis entre le point A de connexion au segment 12ₙ₊₁ et le nœud D de la ligne de neutre 21, à travers le transistor 31ₙ₊₁ associé au segment 12ₙ₊₁.

Dans ces conditions la source 20 commence à débiter un courant important dans cette boucle de courant.

Cependant, le capteur d'intensité 45ₙ et le contrôleur 40ₙ surveillent le niveau du courant dans la maille AB. Dès que l'intensité du courant dépasse un seuil prédéfini, le contrôleur 40ₙ place le second transistor 32ₙ en état d'ouverture, c'est-à-dire dans l'état bloquant.

L'invention, qui permet une protection contre les courts-circuits, est particulièrement bien adaptée au système d'alimentation par le sol pour des véhicules de longueur réduite, tels que des véhicules routiers, tels que des voitures de tourisme ou des cars ou des camions, ce type de véhicule imposant que l'espacement d'isolation entre deux segments consécutifs soit réduit par exemple jusqu'à 40 cm. En conséquence, la survenue de court-circuit est plus probable que dans le cas par exemple d'un système d'alimentation par le sol pour un tramway, pour lequel la distance d'isolation entre deux segments consécutifs est d'environ 3 m. La surveillance du courant et la capacité d'un semi-conducteur du type IGBT à ouvrir le circuit en charge et avant que le courant n'atteigne des valeurs élevées contribuent à la tolérance du système vis-à-vis de ces courts-circuits.

Selon l'invention, les courts-circuits sont maîtrisés sans impacter l'alimentation des autres segments, c'est-à-dire des autres véhicules circulant sur la chaussée équipée du système. Ce dernier présente donc une disponibilité élevée.

Il est à noter que le moyen de commutation commandé venant d'être présenté permet également de pallier à des dysfonctionnements, notamment du second transistor, en connectant ou en isolant le segment associé de la ligne de phase et/ou en connectant ou en isolant le segment associé de la ligne de neutre.

Avec la présente solution le courant de court-circuit peut être limité afin de ne pas déclencher le disjoncteur intégré à la source, situé en amont et en commun de plusieurs segments. Les lignes de neutre et de phase restent donc disponibles pour l'alimentation des autres segments de la même section, qui sont connectés à cette même source de puissance électrique.

Pour le dimensionnement d'un système d'alimentation par le sol, le calcul du nombre de sources est lié aux coûts des sous-stations, mais aussi à la capacité de tenue des lignes de neutre et de phase aux courts-circuits, car plus les sources sont éloignées, plus leur puissance devra être élevée et plus le courant de court-circuit sera élevé. L'utilisation de l'invention afin de limiter la valeur du courant de court-circuit allège donc cette contrainte technique et autorise une augmentation de la puissance des sources et donc soit de mutualiser les connexions à une source pour plusieurs voies, soit d'espacer les sources entre elles.

Il est à noter que dans le mode de réalisation décrit en détail ci-dessus, le contrôleur est présenté comme réalisant la surveillance du courant circulant à travers le second transistor de puissance par une comparaison avec une valeur seuil. En variante d'autres algorithmes peuvent être mis en œuvre, tels que par exemple la prise en compte de la variation dans le temps du courant.

## Revendications

1. Système d'alimentation par le sol (10) destiné à fournir, par conduction, une puissance électrique à un véhicule électrique au cours de son déplacement, le système d'alimentation par le sol comportant :
- une piste de neutre (11) et une piste de phase (12), la piste de phase étant constituée d'une pluralité de segments (12ₙ, 12ₙ₊₁) conducteurs disposés les uns à la suite des autres, et
- une source (20) de puissance électrique connectée à une ligne de neutre (21) et une ligne de phase (22) circulant le long d'une chaussée au niveau de laquelle sont implantées les pistes de neutre et de phase,
chaque segment conducteur étant connecté aux lignes de neutre et de phase par l'intermédiaire d'un moyen de commutation commandé (30ₙ, 30ₙ₊₁) comportant :
- un premier transistor de puissance (31ₙ, 31ₙ₊₁) qui, dans un état passant, est propre à connecter électriquement le segment conducteur à la ligne de neutre,
- un second transistor de puissance (32ₙ, 32ₙ₊₁) qui, dans un état passant, est propre à connecter électriquement le segment conducteur à la ligne de phase, et
- un contrôleur (40ₙ, 40ₙ₊₁) propre à commander les premier et second transistors entre l'état passant et un état bloquant,
**caractérisé en ce que** le moyen de commutation commandé (30ₙ, 30ₙ₊₁) d'un segment conducteur comporte en outre un organe de mesure (45ₙ, 45ₙ₊₁) propre à mesurer une grandeur électrique relative à l'intensité du courant circulant à travers le second transistor et à générer un signal de mesure correspondant, **en ce que** le contrôleur (40ₙ, 40ₙ₊₁) est propre à commander le second transistor de puissance en fonction du signal de mesure, **en ce que** la piste de neutre est connectée à la ligne de neutre par une liaison électrique (34) s'étendant entre un point de connexion à la piste de neutre et un point de connexion à la ligne de neutre, et **en ce que** le contrôleur (40n, 40n+1) est propre à détecter, en fonction du signal de mesure et alors que le segment conducteur est alimenté en énergie électrique, la survenue d'un court-circuit entre le segment conducteur et la ligne de neutre, et, en cas de détection d'un court-circuit, à commander le second transistor de puissance dans l'état bloquant.

2. Système d'alimentation par le sol (10) selon la revendication 1, dans lequel le contrôleur est configuré pour, suite à l'ouverture du second transistor (32ₙ) après la commande du second transistor dans l'état bloquant dû à la détection d'un court-circuit, commander le premier transistor (31ₙ) dans l'état passant.

3. Système d'alimentation par le sol (10) selon la revendication 1 ou 2, dans lequel le contrôleur (40ₙ) est configuré pour recevoir un signal (Sₙ) représentatif de la présence ou l'absence de véhicule au-dessus du segment conducteur (12ₙ) correspondant et pour commander le premier transistor (31ₙ) dans l'état passant suite à :
- l'ouverture du second transistor (32ₙ) après la commande du second transistor dans l'état bloquant suite à la détection d'un court-circuit, et
- l'absence de détection d'un véhicule au-dessus du segment conducteur correspondant.

4. Système d'alimentation par le sol (10) selon l'une quelconque des revendications 1 à 3, dans lequel le contrôleur (40ₙ, 40ₙ₊₁) est propre à détecter la survenue d'un court-circuit en comparant le signal de mesure à une valeur seuil prédéterminée.

5. Système d'alimentation par le sol (10) selon l'une quelconque des revendications précédentes, dans lequel l'organe de mesure est un capteur de courant, notamment un capteur à effet Hall.

6. Procédé mis en œuvre dans un système d'alimentation par le sol (10) destiné à fournir, par conduction, une puissance électrique à un véhicule électrique au cours de son déplacement, le système d'alimentation par le sol comportant :
- une piste de neutre (11) et une piste de phase (12), la piste de phase étant constituée d'une pluralité de segments (12ₙ, 12ₙ₊₁) conducteurs disposés les uns à la suite des autres, et
- une source (20) de puissance électrique connectée à une ligne de neutre (21) et une ligne de phase (22) circulant le long d'une chaussée au niveau de laquelle sont implantées les pistes de neutre et de phase,
la piste de neutre étant connectée à la ligne de neutre par une liaison électrique (34) s'étendant entre un point de connexion à la piste de neutre et un point de connexion à la ligne de neutre,
chaque segment conducteur étant connecté aux lignes de neutre et de phase par l'intermédiaire d'un moyen de commutation commandé (30ₙ, 30ₙ₊₁) comportant :
- un premier transistor de puissance (31ₙ, 31ₙ₊₁) qui, dans un état passant, est propre à connecter électriquement le segment conducteur à la ligne de neutre,
- un second transistor de puissance (32ₙ, 32ₙ₊₁) qui, dans un état passant, est propre à connecter électriquement le segment conducteur à la ligne de phase, et
- un contrôleur (40ₙ, 40ₙ₊₁) propre à commander les premier et second transistors entre l'état passant et un état bloquant,
le procédé étant **caractérisé en ce qu'**il consiste, pour chaque moyen de commutation, à :
- mesurer, au moyen d'un organe de mesure (45ₙ, 45ₙ₊₁) une grandeur électrique relative à l'intensité du courant circulant à travers le second transistor de manière à générer un signal de mesure ;
- suite à l'étape de mesure, à détecter par le contrôleur (40ₙ), en fonction du signal de mesure et alors que le segment conducteur est alimenté en énergie électrique, la survenue d'un court-circuit entre le segment conducteur et la ligne de neutre ; et, en cas de détection d'un court-circuit,
- commander par le contrôleur (40ₙ) le second transistor (32ₙ) dans l'état bloquant.

7. Procédé selon la revendication 6, dans lequel :
- lorsque le segment (12ₙ) doit être porté au potentiel haut pour qu'une puissance puisse être captée par un véhicule électrique passant au-dessus du segment (12ₙ), le contrôleur (40ₙ) commande le basculement du premier transistor (31ₙ) dans l'état bloquant et le basculement du second transistor (32ₙ) dans l'état passant ; puis,
- le contrôleur (40ₙ) traite le signal de mesure généré par l'organe de mesure (45ₙ) de manière à détecter la survenue d'un court-circuit entre le segment conducteur et la ligne de neutre ; et, en cas de détection d'un court-circuit,
- le contrôleur (40ₙ) commande le second transistor (32ₙ) dans l'état bloquant.

8. Procédé selon la revendication 7, dans lequel, après que le contrôleur (40ₙ) a commandé le second transistor (32ₙ) dans l'état bloquant, lorsque plus aucun véhicule n'est détecté au-dessus du segment (12ₙ), le contrôleur (40ₙ) commande le premier transistor (31ₙ) dans l'état passant.

## Patentansprüche

1. Boden-Stromversorgungssystem (10), das dazu bestimmt ist, ein Elektrofahrzeug während dessen Fahrt durch Leitung mit elektrischer Energie zu versorgen, wobei das Boden-Stromversorgungssystem umfasst:
- eine Neutralleiterbahn (11) und eine Phasenleiterbahn (12), wobei die Phasenleiterbahn aus einer Mehrzahl von hintereinander angeordneten leitenden Segmenten (12ₙ, 12ₙ₊₁) besteht, und
- eine Stromquelle (20), die an eine Neutralleitung (21) und eine Phasenleiterleitung (22) angeschlossen ist, die entlang einer Fahrbahn verlaufen, auf der die Neutral- und Phasenleiterbahnen verlegt sind,
wobei jedes leitende Segment über eine gesteuerte Schalteinrichtung (30ₙ, 30ₙ₊₁) mit der Neutral- und der Phasenleitung verbunden ist, umfassend:
- einen ersten Leistungstransistor (31ₙ, 31ₙ₊₁), der im Durchlasszustand dazu geeignet ist, das leitende Segment elektrisch mit der Neutralleitung zu verbinden,
- einen zweiten Leistungstransistor (32ₙ, 32ₙ₊₁), der dazu geeignet ist, im Durchlasszustand das Leitersegment elektrisch mit der Phasenleitung zu verbinden, und
- eine Steuerung (40ₙ, 40ₙ₊₁), die dazu geeignet ist, den ersten und den zweiten Transistor zwischen dem Durchlasszustand und einem Sperrzustand zu steuern,
**dadurch gekennzeichnet, dass** die gesteuerte Schalteinrichtung (30ₙ, 30ₙ₊₁) eines Leitersegments ferner ein Messelement (45ₙ, 45ₙ₊₁) umfasst, das dazu geeignet ist, eine elektrische Größe zu messen, die sich auf die Stromstärke bezieht, die durch den zweiten Transistor fließt, und ein entsprechendes Messsignal zu erzeugen, dass die Steuerung (40ₙ, 40ₙ₊₁) dazu geeignet ist, den zweiten Leistungstransistor in Abhängigkeit vom Messsignal anzusteuern, dass die Neutralleiterbahn über eine elektrische Verbindung (34), die sich zwischen einem Anschlusspunkt an der Neutralleiterbahn und einem Anschlusspunkt an der Neutralleitung erstreckt, mit der Neutralleitung verbunden ist, und dass die Steuerung (40ₙ, 40ₙ₊₁) dazu geeignet ist, in Abhängigkeit vom Messsignal und während das leitende Segment mit elektrischer Energie versorgt wird, das Auftreten eines Kurzschlusses zwischen dem leitenden Segment und der Neutralleitung zu erkennen und im Falle der Erkennung eines Kurzschlusses den zweiten Leistungstransistor in den Sperrzustand zu steuern.

2. Boden-Stromversorgungssystem (10) nach Anspruch 1, wobei die Steuerung dazu ausgebildet ist, nach dem Öffnen des zweiten Transistors (32ₙ), nachdem dieser aufgrund der Erkennung eines Kurzschlusses in den Sperrzustand gesteuert wurde, den ersten Transistor (31ₙ) in den Durchlasszustand zu steuern.

3. Boden-Stromversorgungssystem (10) nach Anspruch 1 oder 2, wobei die Steuerung (40ₙ) dazu ausgebildet ist, ein Signal (Sₙ) zu empfangen, das das Vorhandensein oder Fehlen eines Fahrzeugs über dem entsprechenden leitenden Segment (12ₙ) anzeigt, und den ersten Transistor (31ₙ) in den Durchlasszustand zu steuern, und zwar nach:
- dem Öffnen des zweiten Transistors (32ₙ) nach dem Steuern des zweiten Transistors in den Sperrzustand infolge der Erkennung eines Kurzschlusses und
- dem Ausbleiben der Erkennung eines Fahrzeugs über dem entsprechenden leitenden Segment.

4. Boden-Stromversorgungssystem (10) nach einem der Ansprüche 1 bis 3, wobei die Steuerung (40ₙ, 40ₙ₊₁) dazu geeignet ist, das Auftreten eines Kurzschlusses durch Vergleich des Messsignals mit einem vorgegebenen Schwellenwert zu erkennen.

5. Boden-Stromversorgungssystem (10) nach einem der vorhergehenden Ansprüche, wobei das Messelement ein Stromsensor ist, insbesondere ein Hall-Sensor.

6. Verfahren, das in einem Boden-Stromversorgungssystem (10) durchgeführt wird, das dazu ausgebildet ist, ein Elektrofahrzeug während dessen Fahrt durch Leitung mit Energie zu versorgen, wobei das Boden-Stromversorgungssystem umfasst:
- eine Neutralleiterbahn (11) und eine Phasenleiterbahn (12), wobei die Phasenleiterbahn aus einer Mehrzahl von hintereinander angeordneten leitenden Segmenten (12ₙ, 12ₙ₊₁) besteht, und
- eine Stromquelle (20), die mit einer Neutralleitung (21) und einer Phasenleitung (22) verbunden ist, die entlang einer Fahrbahn verlaufen, auf der die Neutralleiter- und Phasenbahnen verlegt sind,
wobei die Neutralleiterbahn über eine elektrische Verbindung (34), die sich zwischen einem Anschlusspunkt an der Neutralleiterbahn und einem Anschlusspunkt an der Neutralleitung erstreckt, mit der Neutralleitung verbunden ist,
wobei jedes leitende Segment über eine gesteuerte Schaltvorrichtung (30ₙ, 30ₙ₊₁) mit der Neutralleiter- und der Phasenleitung verbunden ist, umfassend:
- einen ersten Leistungstransistor (31ₙ, 31ₙ₊₁), der in einem Durchlasszustand dazu geeignet ist, das leitende Segment elektrisch mit der Neutralleitung zu verbinden,
- einen zweiten Leistungstransistor (32ₙ, 32ₙ₊₁), der in einem Durchlasszustand dazu geeignet ist, das leitende Segment elektrisch mit der Phasenleitung zu verbinden, und
- eine Steuerung (40ₙ, 40ₙ₊₁), die dazu geeignet ist, den ersten und den zweiten Transistor zwischen dem Durchlasszustand und einem Sperrzustand zu steuern,
wobei das Verfahren **dadurch gekennzeichnet ist, dass** es für jede Schalteinrichtung darin besteht:
- mittels einer Messeinrichtung (45ₙ, 45ₙ₊₁) eine elektrische Größe zu messen, die sich auf die Stromstärke bezieht, die durch den zweiten Transistor fließt, um ein Messsignal zu erzeugen,
- im Anschluss an den Messschritt das Auftreten eines Kurzschlusses zwischen dem Leitersegment und der Neutralleitung zu erkennen, durch die Steuerung (40ₙ) in Abhängigkeit vom Messsignal und während das Leitersegment mit elektrischer Energie versorgt wird, und im Falle der Erkennung eines Kurzschlusses,
- den zweiten Transistor (32ₙ) durch die Steuerung (40ₙ) in den Sperrzustand zu steuern.

7. Verfahren nach Anspruch 6, wobei:
- wenn das Segment (12ₙ) auf das hohe Potential gebracht werden muss, damit ein über das Segment (12ₙ) fahrendes Elektrofahrzeug Energie aufnehmen kann, die Steuerung (40ₙ) das Umschalten des ersten Transistors (31ₙ) in den Sperrzustand und das Umschalten des zweiten Transistors (32ₙ) in den Durchlasszustand steuert; anschließend
- die Steuerung (40ₙ) das von der Messeinrichtung (45ₙ) erzeugte Messsignal verarbeitet, um das Auftreten eines Kurzschlusses zwischen dem leitenden Segment und der Neutralleitung zu erkennen, und im Falle der Erkennung eines Kurzschlusses
- die Steuerung (40ₙ) den zweiten Transistor (32ₙ) in den Sperrzustand steuert.

8. Verfahren nach Anspruch 7, wobei nachdem die Steuerung (40ₙ) den zweiten Transistor (32ₙ) in den Sperrzustand gesteuert hat, wenn kein Fahrzeug mehr über dem Segment (12n) erkannt wird, die Steuerung (40ₙ) den ersten Transistor (31ₙ) in den Durchlasszustand steuert.

## Claims

1. A system for supplying power via the ground (10) intended to provide electric power, by conduction, to an electric vehicle during movement thereof, the system for supplying power via the ground comprising:
- a neutral track (11) and a phase track (12), the phase track consisting of a plurality of conductive segments (12ₙ, 12ₙ₊₁) disposed one after the other, and
- a source (20) of electrical power connected to a neutral line (21) and a phase line (22) circulating along a roadway at which the neutral and phase tracks are implanted, each conductive segment being connected to the neutral and phase lines by means of a controlled switching means (30ₙ, 30ₙ₊₁) comprising:
- a first power transistor (31ₙ, 31ₙ₊₁) which, in an on state, is capable of electrically connecting the conductive segment to the neutral line,
- a second power transistor (32ₙ, 32ₙ₊₁) which, in an on state, is capable of electrically connecting the conductive segment to the phase line, and
- a controller (40ₙ, 40ₙ₊₁) capable of setting the first and second transistors between the on state and an off state,
**characterised in that** the controlled switching means (30ₙ, 30ₙ₊₁) of a conductive segment further comprises a measuring member (45ₙ, 45ₙ₊₁) capable of measuring an electrical quantity relative to the intensity of the current circulating through the second transistor and of generating a corresponding measurement signal, **in that** the controller (40ₙ, 40ₙ₊₁) is capable of controlling the second power transistor depending on the measurement signal, **in that** the neutral track is connected to the neutral line by an electrical connection (34) extending between a connection point to the neutral track and a connection point to the neutral line, and **in that** the controller (40n, 40n+1) is capable of detecting, depending on the measurement signal and while the conductive segment is supplied with electrical energy, the occurrence of a short-circuit between the conductive segment and the neutral line, and, in the event of detection of a short-circuit, of setting the second power transistor in the off state.

2. The system for supplying power via the ground (10) according to claim 1, wherein the controller is configured, following the opening of the second transistor (32ₙ) after setting the second transistor in the off state due to the detection of a short-circuit, to set the first transistor (31ₙ) in the on state.

3. The system for supplying power via the ground (10) according to claim 1 or 2, wherein the controller (40ₙ) is configured to receive a signal (Sₙ) representative of the presence or the absence of a vehicle above the corresponding conductive segment (12ₙ) and to set the first transistor (31ₙ) in the on state following:
- the opening of the second transistor (32ₙ) after setting the second transistor in the off state following the detection of a short-circuit, and
- the absence of detection of a vehicle above the corresponding conductive segment.

4. The system for supplying power via the ground (10) according to any one of claims 1 to 3, wherein the controller (40ₙ, 40ₙ₊₁) is capable of detecting the occurrence of a short-circuit by comparing the measurement signal to a predetermined threshold value.

5. The system for supplying power via the ground (10) according to any one of the preceding claims, wherein the measuring member is a current sensor, in particular a Hall-effect sensor.

6. A method implemented in a system for supplying power via the ground (10) intended to provide electric power, by conduction, to an electric vehicle during movement thereof, the system for supplying power via the ground comprising:
- a neutral track (11) and a phase track (12), the phase track consisting of a plurality of conductive segments (12ₙ, 12ₙ₊₁) disposed one after the other, and
- a source (20) of electrical power connected to a neutral line (21) and a phase line (22) circulating along a roadway at which the neutral and phase tracks are implanted,
the neutral track being connected to the neutral line by an electrical connection (34) extending between a connection point to the neutral track and a connection point to the neutral line,
each conductive segment being connected to the neutral and phase lines by means of a controlled switching means (30ₙ, 30ₙ₊₁) comprising:
- a first power transistor (31ₙ, 31ₙ₊₁) which, in an on state, is capable of electrically connecting the conductive segment to the neutral line,
- a second power transistor (32ₙ, 32ₙ₊₁) which, in an on state, is capable of electrically connecting the conductive segment to the phase line, and
- a controller (40ₙ, 40ₙ₊₁) capable of setting the first and second transistors between the on state and an off state,
the method being **characterised in that** it consists, for each switching means, in:
- measuring, by means of a measuring member (45ₙ, 45ₙ₊₁) an electrical quantity relative to the intensity of the current circulating through the second transistor so as to generate a measurement signal;
- following the measuring step, detecting by the controller (40ₙ), depending on the measurement signal and while the conductive segment is supplied with electrical energy, the occurrence of a short-circuit between the conductive segment and the neutral line; and, in the event of detection of a short-circuit,
- setting by the controller (40ₙ) the second transistor (32ₙ) in the off state.

7. A method according to claim 6, wherein:
- when the segment (12ₙ) must be brought to high potential so that power could be picked up by an electric vehicle passing over the segment (12ₙ), the controller (40ₙ) commands the switchover of the first transistor (31ₙ) in the off state and the switchover of the second transistor (32ₙ) in the on state; then,
- the controller (40ₙ) processes the measurement signal generated by the measuring member (45ₙ) so as to detect the occurrence of a short-circuit between the conductive segment and the neutral line; and, in case of detection of a short-circuit,
- the controller (40ₙ) sets the second transistor (32ₙ) in the off state.

8. The method according to claim 7, wherein, after the controller (40ₙ) has set the second transistor (32ₙ) in the off state, when no more vehicles are detected above the segment (12ₙ), the controller (40ₙ) set the first transistor (31ₙ) in the on state.
